# EUROPEAN PATENT APPLICATION

(11) **EP 4 632 045 A1**
(43) Date of publication of application: **15.10.2025**
(21) Application number: 23952856.5
(22) Date of filing: 09.11.2023
(51) Int. Cl.: C10G 51/06, C10G 51/00, C10G 55/00, B01J 8/24, C07C 4/06, C07C 11/06, C10G 11/18

(54) **CATALYTIC CRACKING DEVICE AND METHOD**

(30) Priority: 20.09.2023 CN 202311220149
(71) Applicant: PetroChina Company Limited, Dongcheng District Beijing 100007 (CN)
(72) Inventor: ZHANG, Zhaoqian, Beijing 100007 (CN); WANG, Jian, Beijing 100007 (CN); ZHANG, Zhongdong, Beijing 100007 (CN); LIU, Zhaoyong, Beijing 100007 (CN); WANG, Qian, Beijing 100007 (CN); SUN, Zhiguo, Beijing 100007 (CN); CHI, Kebin, Beijing 100007 (CN); MENG, Fanfang, Beijing 100007 (CN); YU, Qianqian, Beijing 100007 (CN); WANG, Ruipu, Beijing 100007 (CN)
(74) Representative: Meissner Bolte Partnerschaft mbB
(86) International application number: PCT/CN2023/130672
(87) International publication number: WO 2025/060210

(57) **Abstract**

The present disclosure relates to the field of catalysis. Provided are a catalytic cracking device and method. The device comprises a multi-stage reaction unit (1) and a cracking reaction unit (2), wherein the multi-stage reaction unit comprises a variable-diameter riser pipe (11) and a multi-stage reaction settler (12), and the cracking reaction unit (2) comprises a cracking riser pipe (21) and a cracking settler (23); the variable-diameter riser pipe (11) comprises a first reaction zone (11a), a second reaction zone (11b) and a third reaction zone (11c); the inner diameter of the second reaction zone (11b) is larger than the inner diameter of the first reaction zone (11a) and the inner diameter of the third reaction zone (11c), and an inner conveying pipe (13) extending into the second reaction zone (11b) is provided at the connection between the third reaction zone (11c) and the second reaction zone (11b); and a cracking catalyst outlet (25) in communication with the second reaction zone (11b) is provided in a cracking stripping section (23a) of the cracking settler (23). The device can improve the reaction efficiency of catalytic cracking of heavy oil and light hydrocarbons, and achieve a tight coupling between the heavy oil and the light hydrocarbons.

## Description

### Cross Reference to Related Applications

The present application claims the benefits of Chinese Patent Application No. 202311220149.6 filed on Sep. 20, 2023, the content of which is incorporated herein by reference.

### FIELD

The present disclosure relates to the technical field of catalysis, in particular to a catalytic cracking device and a method thereof.

### BACKGROUND

In the early stage of catalytic cracking reactions, aluminum silicate pellets were used as catalysts, and the reactors were dense bed reactors. As zeolite catalysts having high activity and high selectivity are emerged, the reaction rates of petroleum hydrocarbons with the catalysts have been greatly improved; in addition, quick conveying bed riser pipes are used for the reactors, and are beneficial for improving the yield and selectivity of liquid products. Compared with dense bed reactors, riser pipe reactors include great improvements in structure and operation mode, mainly reflected in aspects such as mixing of oil and gas with catalyst in the feeding section, rapid separation of the products at the outlet, reduced temperature gradient on the cross section of the riser pipe, and reduced return, etc. Owing to the fact that highly active zeolite catalysts greatly improved the reaction intensity, many companies have developed their own quick conveying bed reactors, i.e., riser pipe reactors, since the 1960s and 1970s. Such reactors still have strong vitality because of their high elasticity and flexibility, focus on the primary cracking of heavy oils, and ideal yield and selectivity of light oils. Since the end of last century, the China III gasoline standard began to limit the olefin content in gasoline. CN1237477A, CN1245202A and CN1232069A have proposed a variable-diameter riser pipe. A section with an expanded diameter is added in the middle of the riser pipe to form a fluidized bed reaction section, thereby secondary reaction of generated gasoline can be enhanced. It is found in researches that such a reactor takes account of secondary transformation of gasoline while performs primary cracking of heavy oils.

The initial variable-diameter riser pipe technique didn't consider that an inner component is required between the riser pipe section and the fluidized bed section to adjust the gas-solid fluidization state. Since industrial installations are usually in size at a meter level, it is difficult to form stable fluidization of the gas-solid fluid at the lower part of the expanded section and then form a stable dense phase zone of solid particles if there is no inner component, owing to factors such as high-speed fluid jet from the lower riser pipe into the expanded section. Although arched (convex) distribution plate, special-shaped (basin-type) distribution plate, concave distribution plate and mushroom-head distributor have been successively introduced in the process of industrial implementation of variable-diameter riser pipes to realize fully uniform and stable fluidization of the high-speed oil and gas and catalyst flowing out of the riser pipe and some catalyst forms a stable fluidized bed, the expanded section of the riser pipe is usually connected to the upper riser pipe via a reduced frustum-shaped outer cylinder, and no inner component is installed in this section to adjust the fluidization of the gas and solid.

In order to improve the quality of gasoline, reduce the olefin content in gasolines and increase the yield of cracked gases, a lot of technical measures for light hydrocarbon recycling have been disclosed at home and abroad, and there are two typical measures: The first measure is to recycle gasoline or other light hydrocarbons to the original heavy oil riser pipe, usually inject them into the upstream of the feed oil nozzle. For example, US5043522A and US5846403A have disclosed that FCC gasoline is injected into the upstream of the feed oil nozzle and is catalytically converted by using a regenerated catalyst having high temperature and high activity; Chinese Patent CN1160746A has also disclosed a method of injecting low-quality gasoline such as straight-run gasoline and coker gasoline into the lower reaction part of a riser pipe so that the gasoline contacts with the regenerated catalyst in precedence; the second measure is to recycle with a separate gasoline or light hydrocarbon riser pipe; for example, CN1069054A and US3784463A employ a reactor with two riser pipes for reaction, wherein low-quality gasoline, including FCC crude gasoline, is injected into the gasoline riser pipe reactor for catalytic upgrading of the low-quality gasoline under the reaction conditions of a high temperature and a high catalyst-oil ratio, so as to improve the yield of liquefied gas and the octane number of gasoline; the molecules generated after the light hydrocarbon feed contacts with the catalyst are relatively small, and the volume expansion is significant, having an influence on the heavy oil feed in the upper part of the FCC riser pipe reactor and the contact between the heavy oils and the catalyst. With the first measure, the proportion of recycled light hydrocarbons is low, in order to prevent negative effects on the reaction of heavy oils; with the second measure, a separate light hydrocarbon riser pipe is provided on the basis of the existing single riser pipe reactor, so that secondary cracking reaction of the light hydrocarbons can happen separately, and separate optimized reactions of different raw materials can be realized. However, with the existing riser pipe, the control on the reaction depth is not ideal; an over-cracking reaction may happen easily if the outlet temperature of the riser pipe is increased to achieve higher conversion depth; it is unable to achieve ideal conversion depth if the reaction temperature at the outlet of the riser pipe is too low.

In addition, "Analysis on Application of DCC Dural-Riser Process" has reported the characteristics a device for a DCC dual-riser process (i.e., DCC plus). The heavy oil reactor includes a riser pipe and a turbulent bed, and the oil and gas and the catalyst at the end of the light hydrocarbon riser pipe are injected into a main settler. "Analysis on Operation of Catalytic Cracking Unit in Combined Process of MIP for Heavy Oil and LTAG for Catalytic Cracking of Low-Quality Diesel" has disclosed a dual-reactor process that uses a MIP reactor for heavy oil and a LTAG reactor for catalytic cracking of low-quality diesel in combination. However, there are still some defects, such as an unsatisfactory cracking effect of heavy raw materials and light hydrocarbons, and difficulties in flexible regulation and control of product properties and product distribution.

### SUMMARY

The object of the present disclosure is to provide a catalytic cracking device and a method thereof, which can enhance gas-solid mixing and contact in a heavy oil cracking process and a light hydrocarbon cracking process, improve catalytic reaction efficiency, achieve close coupling between a heavy oil reactor and a light hydrocarbon reactor, and improve the operating flexibility in regulation and control of product properties and product distribution.

In the research of catalytic cracking, the inventor has unexpectedly found that after a heavy oil reactor that employs an expanded riser pipe is coupled with a light hydrocarbon cracking reactor in parallel, the catalyst can be recycled from the cracking catalyst outlet to the expanded section of the heavy oil reactor after light hydrocarbon cracking, thereby the heavy oil cracking process and the light hydrocarbon cracking process can be executed separately, the recycle ratio of light hydrocarbons can be improved, and the catalytic reaction of heavy oils can be enhanced; by arranging an inner conveying pipe in the expanded section of the heavy oil reactor, the gas-solid fluidization state in the expanded section can be changed and optimized, and the range of adjustment of the linear velocity of the gas and the density of the catalyst bed in the expanded section can be widened; by arranging a turbulent reaction section in the cracking settler of the light hydrocarbon cracking reactor, the contact between the light hydrocarbons and the cracking catalyst in the reaction section can be enhanced, so as to realize an efficient contact reaction between the light hydrocarbons and the catalyst at a low temperature and a low air velocity, and avoid an over-cracking reaction of the light hydrocarbons caused by an excessively high reaction temperature; thus, by means of the coupling between the heavy oil reactor and the light hydrocarbon cracking reactor, the cracking operations of heavy oils and light hydrocarbons can be controlled separately and efficiently at the same time, thereby a variety of operating means can be provided, and various flexible operations of regulation and control of product properties and product distribution can be realized.

In order to achieve the above object, in a first aspect, the present disclosure provides a catalytic cracking device, which comprises a multi-stage reaction unit and a cracking reaction unit, wherein the multi-stage reaction unit comprises a variable-diameter riser pipe and a multi-stage reaction settler, and the cracking reaction unit comprises a cracking riser pipe and a cracking settler; the variable-diameter riser pipe comprises a first reaction zone, a second reaction zone and a third reaction zone that are sequentially connected in series in its length direction, an outlet of the third reaction zone is in communication with the multi-stage reaction settler, the inner diameter of the second reaction zone is larger than the inner diameter of the first reaction zone and the inner diameter of the third reaction zone, and an inner conveying pipe extending into the second reaction zone is provided at the connection between the third reaction zone and the second reaction zone; the cracking settler comprises a cracking stripping section, a turbulent reaction section and a cracking settling section that are sequentially arranged in its length direction, an outlet of the cracking riser pipe is located in the turbulent reaction section, and the cracking stripping section is provided with a cracking catalyst outlet that is in communication with the second reaction zone.

Preferably, a ratio of the inner diameter of the inner conveying pipe to the inner diameter of the third reaction zone is 0.9-1.2 : 1, and a ratio of the length of the inner conveying pipe to the length of the second reaction zone is 0.15-0.8 : 1.

More preferably, a ratio of the inner diameter of the first reaction zone to the inner diameter of the second reaction zone to the inner diameter of the third reaction zone is 1 : 2-5 : 0.7-1.5, and a ratio of the length of the first reaction zone to the length of the second reaction zone to the length of the third reaction zone is 1 : 0.3-2 : 0.5-2; a ratio of the inner diameter of the turbulent reaction section to the inner diameter of the cracking stripping section to the inner diameter of the cracking settling section is 1 : 0.4-0.8 : 2.5-5, a ratio of the length of the turbulent reaction section to the length of the cracking stripping section to the length of the cracking settling section is 1 : 1.5-3 : 1.5-4, and a ratio of the length of the variable-diameter riser pipe to the length of the cracking riser pipe is 1 : 0.5-1.2.

Further preferably, at least one inner conveying hole is provided in a side wall of the inner conveying pipe, and a distance between the inner conveying hole and an inlet of the third reaction zone is 0.5-2 m.

Specifically, a ratio of the total area of the at least one inner conveying hole to the cross-sectional area of the inner conveying pipe is 0.05-0.3 : 1.

As a preferred embodiment, an inner distribution component connected to the first reaction zone is provided inside the second reaction zone, and the inner distribution component is provided with a plurality of distribution holes.

Preferably, the inner distribution component comprises a distribution cylinder connected to the first reaction zone and an end distribution plate connected to the distribution cylinder, wherein both the distribution cylinder and the end distribution plate are provided with the distribution holes, and the end distribution plate is located at an end of the distribution cylinder away from the first reaction zone.

More preferably, a ratio of the total area of the distribution holes in the distribution cylinder to the cross-sectional area of the first reaction zone is 0.6-4 : 1; and a ratio of the total area of the distribution holes in the end distribution plate to the vertical projection area of the end distribution plate is 0.1-0.3 : 1.

More preferably, a side channel extending to the outside of the distribution cylinder is provided at the distribution holes in the distribution cylinder, and an open section of the side channel away from the distribution cylinder is a bevel surface facing the first reaction zone.

Further preferably, a ratio of the area of the end distribution plate to the cross-sectional area of the second reaction zone is 0.7-0.85 : 1.

Specifically, the first reaction zone, the second reaction zone, the third reaction zone and the inner conveying pipe are coaxially arranged, and the cracking catalyst outlet is located at the bottom of the cracking stripping section and is in communication with the bottom of the second reaction zone.

More specifically, the variable-diameter riser pipe further comprises a multi-stage reaction pre-rising section connected to an inlet of the first reaction zone, and the cracking riser pipe comprises a cracking pre-rising section and a cracking reaction section that are sequentially connected in series in its length direction, an outlet of the cracking reaction section is located at an end of the turbulent reaction section near the cracking stripping section, a transition section between the multi-stage reaction pre-rising section and the first reaction zone is in communication with a multi-stage reaction feeding unit, and a transition section between the cracking pre-rising section and the cracking reaction section is in communication with a cracking feeding unit.

Further specifically, a cracking distributor is provided at the outlet of the cracking reaction section, and a gas phase outlet of the cracking settling section is in communication with the multi-stage reaction settler.

Typically, the device further comprises a regeneration unit, wherein the multi-stage reaction settler is provided with a multi-stage reaction catalyst outlet in communication with a feeding inlet of the regeneration unit, and a regenerated catalyst outlet of the regeneration unit is in communication with the variable-diameter riser pipe and/or the cracking riser pipe.

In a second aspect, the present disclosure provides a catalytic cracking method, which employs the device described above and comprises the following steps:
inputting a multi-stage reaction mixture formed by mixing heavy raw materials with a multi-stage reaction catalyst from the inlet of the first reaction zone into the first reaction zone and the second reaction zone sequentially, and then into the third reaction zone through the inner conveying pipe for multi-stage catalytic reactions to obtain multi-stage reactants, and performing multi-stage reaction separation on the multi-stage reactants through the multi-stage reaction settler to obtain multi-stage reaction oil and gas products and a spent multi-stage reaction catalyst;
inputting a cracking mixture formed by mixing light raw materials with a cracking catalyst from the inlet of the cracking riser pipe and performing a cracking catalytic reaction through the cracking riser pipe to obtain cracking reactants, feeding the cracking reactants into the turbulent reaction section for a turbulent reaction, then performing cracking separation through the cracking settling section and cracking stripping through the cracking stripping section to obtain cracking oil and gas products and a spent cracking catalyst; and
inputting the spent cracking catalyst into the second reaction zone from the cracking catalyst outlet to mix it with the multi-stage reaction mixture.

Preferably, the inlet temperature of the inner conveying pipe is 510-540°C, and the outlet temperature of the cracking riser pipe is 540-620°C.

Preferably, the inlet temperature of the inner conveying pipe is 550-640°C, and the outlet temperature of the cracking riser pipe is 560-660°C.

More preferably, the multi-stage reaction mixture is retained in the first reaction zone for 0.8-2s, retained in the second reaction zone for 5-15s, and retained in the third reaction zone for 0.5-1.5s; and the cracking mixture is retained the cracking riser pipe for 0.8-3.5s, and retained in the turbulent reaction section for 3-13s.

With the technical solution described above, the catalytic cracking device provided by the present disclosure can execute a heavy oil cracking process and a light hydrocarbon cracking process separately with a multi-stage reaction unit and a cracking reaction unit that are arranged in parallel, so as to improve the recycle ratio of light hydrocarbons, and the catalyst can be recycled to the second reaction zone from the cracking catalyst outlet after light hydrocarbon cracking, thereby the flow rate and activity of the catalyst in the second reaction zone can be improved, the catalytic reaction of heavy oils can be enhanced, and close coupling between the heavy oil cracking process and the light hydrocarbon cracking process can be realized; by arranging an inner conveying pipe in the variable-diameter riser pipe of the multi-stage reaction unit, the gas-solid fluidization state in the second reaction zone can be changed and optimized, and the range of adjustment of the linear velocity of the gas and the density of the catalyst bed in the second reaction zone can be widened; in addition, by arranging a turbulent reaction section in the cracking settler of the cracking reaction unit, the contact between the light hydrocarbons and the cracking catalyst in the reaction section can be fully enhanced on the basis of the high density of the cracking catalyst in the turbulent reaction section, thereby an efficient contact reaction of the light hydrocarbons with the catalyst can be realized at a lower temperature and a lower air velocity, and an over-cracking reaction of the light hydrocarbons resulted from an excessively high temperature can be avoided; by means of the coupling between the two reaction units in the device provided by the present disclosure, the cracking operations of the heavy oils and the light hydrocarbons can be controlled separately at the same time, more operating means can be provided, and various flexible operations of regulation and control of product properties and product distribution can be realized.

Other advantages of the present disclosure and technical effects of preferred embodiments will be further explained in the following detailed description.

### BRIEF DESCRIPTION OF THE DRAWINGS

The accompanying drawings, which constitute a part of the present disclosure, are provided to facilitate further understanding the present disclosure; the illustrative embodiments and associated description in the present disclosure are intended to explain the present disclosure, and shall not be deemed as constituting any undue limitation to the present disclosure. In the figures:
Fig. 1 is a schematic structural diagram of a specific embodiment of the catalytic cracking device in the present disclosure; and
Fig. 2 is a schematic structural diagram of an embodiment of the inner conveying pipe and the inner distribution component in the present disclosure.

### Reference Numerals

1 - multi-stage reaction unit, 11 - variable-diameter riser pipe, 11a - first reaction zone, 11b - second reaction zone, 11c - third reaction zone, 11d - multi-stage reaction pre-rising section, 12 - multi-stage reaction settler, 12a - multi-stage reaction stripping section, 12b - multi-stage reaction settling section, 12c - multi-stage reaction cyclone separator, 13 - inner conveying pipe, 13a - inner conveying hole, 14 - inner distribution component, 14a - distribution hole, 14b - distribution cylinder, 14c - end distribution plate, 14d - side channel, 15 - multi-stage reaction catalyst outlet;
2 - cracking reaction unit, 21 - cracking riser pipe, 21a - cracking pre-rising section, 21b - cracking reaction section, 22 - cracking distributor, 23 - cracking settler, 23a - cracking stripping section, 23b - turbulent reaction section, 23c - cracking settling section, 23d - cracking cyclone separator, 24 - cracking gas phase conveying pipe, 25 - cracking catalyst outlet;
3 - regeneration unit, 31 - regenerated catalyst outlet, 32 - regeneration cyclone separator, 33 - regeneration air inlet, 34 - regeneration flue gas outlet;
4 - catalyst cooler; 5 - spent catalyst pipeline; 6 - regeneration pipeline; 7 - multi-stage reaction feeding unit; 8 - cracking feeding unit; 9 - quench oil and gas unit; 10 - stripping steam unit;
A - multi-stage reaction pre-raising gas; B - cracking pre-raising gas; C - regeneration air; D - regeneration flue gas; E - post-reaction oil and gas; F - multi-stage reaction stripping steam; G - low-temperature water vapor; H - high-temperature water vapor.

### DETAILED DESCRIPTION

Specific embodiments of the present disclosure will be detailed below with reference to the accompanying drawings. It may be understood that the embodiments described herein are only provided to describe and explain the present disclosure, but are not intended to constitute any limitation on the present disclosure.

It may also be noted: in the description of the present disclosure, unless otherwise specified and defined explicitly, the terms "connect", "interconnect", etc. shall be interpreted in their general meanings, for example, a connection may be a detachable connection or an integral connection; may be a direct connection or an indirect connection via an intermediate medium; may be abutment, internal communication, or interaction between two elements. Those having ordinary skills in the art may interpret the specific meanings of the terms in the present disclosure in their context.

It may be noted that the orientational or positional relations indicated by terms "top", "bottom", "front", "rear", "inside" and "outside", etc. are based on the orientational or positional relations in the drawings and used only to ease and simplify the description of the present disclosure, rather than indicating or implying that the involved device or component may be in a specific orientation or may be constructed and operated in a specific orientation. Therefore, the use of these terms shall not be deemed as constituting any limitation on the present disclosure. In addition, the terms "first" and "second", etc. are only used for a descriptive purpose, and can't be understood as indicating or implying relative importance or implicitly indicating the number of indicated technical features. Therefore, features defined with "first" and "second" may explicitly or implicitly include one or more of the features.

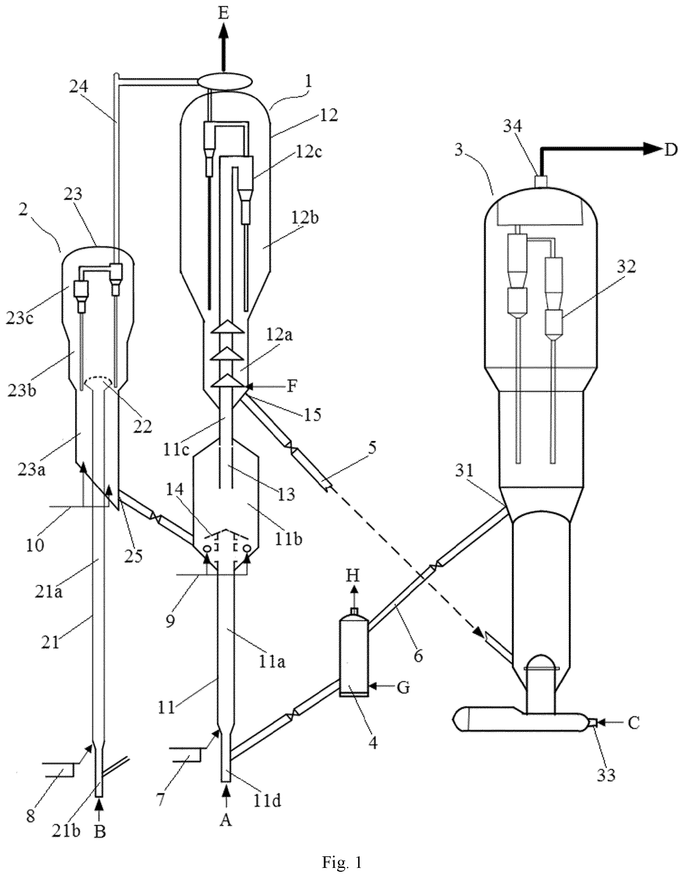

In a basic embodiment of the present disclosure, as shown in Fig. 1, a catalytic cracking device comprises a multi-stage reaction unit 1 and a cracking reaction unit 2, wherein the multi-stage reaction unit 1 comprises a variable-diameter riser pipe 11 and a multi-stage reaction settler 12, and the cracking reaction unit 2 comprises a cracking riser pipe 21 and a cracking settler 23; the variable-diameter riser pipe 11 comprises a first reaction zone 11a, a second reaction zone 11b and a third reaction zone 11c that are sequentially connected in series in its length direction, an outlet of the third reaction zone 11c is in communication with the multi-stage reaction settler 12, the inner diameter of the second reaction zone 11b is larger than the inner diameter of the first reaction zone 11a and the inner diameter of the third reaction zone 11c, and an inner conveying pipe 13 extending into the second reaction zone 11b is provided at the connection between the third reaction zone 11c and the second reaction zone 11b; the cracking settler 23 comprises a cracking stripping section 23a, a turbulent reaction section 23b and a cracking settling section 23c that are sequentially arranged in its length direction, an outlet of the cracking riser pipe 21 is located in the turbulent reaction section 23b, and the cracking stripping section 23a is provided with a cracking catalyst outlet 25 that is in communication with the second reaction zone 11b.

The catalytic cracking device provided by the present disclosure can be applied to catalytic cracking processes in a variety of chemical production fields, and is especially suitable for catalytic cracking of heavy oils and light hydrocarbons, for example, for producing ultra-low olefin gasolines or producing more cracked gases; the reaction unit 1 is used for catalytic cracking of heavy raw materials (heavy oils), while the cracking reaction unit 2 is used for catalytic cracking of light raw materials (light hydrocarbons). It may be emphasized that the catalytic cracking device in the present application is based on a parallel arrangement of a multi-stage reaction unit 1 and a cracking reaction unit 2, can realize switching between two operating modes, i.e., producing ultra-low olefin gasolines and producing more cracked gases, by changing the catalyst and adjusting the operating conditions, and can increase the depth of adjustment and range of variation in the two modes, so as to realize processing capacity with a greater ratio of light hydrocarbons relative to heavy oils; the light hydrocarbons may be received from outside the multi-stage reaction unit 1 in the device or even outside the workshop or factory. In addition, when the multi-stage reaction unit 1 and the cracking reaction unit 2 are connected in parallel, the catalyst is recycled to the second reaction zone 11b from the cracking catalyst outlet 25 after light hydrocarbon cracking, so that the high-temperature spent catalyst with high cracking activity after light hydrocarbon reaction can be fully utilized and replenished to the second reaction zone 11b of the multi-stage reaction unit 1, thereby the concentration and activity of the catalyst in the multi-stage reaction unit 1 are effectively improved, and close coupling between the multi-stage reaction unit 1 and the cracking reaction unit 2 is realized.

During the research, the inventor has found that the apparent gas velocity in the expanded section of an existing MIP-CGP reactor is too low to carry the catalyst to the third reaction zone 11c, and choking may occur easily or even cause accumulation of the catalyst in the expanded section, resulting in accidents of the device; if the apparent gas velocity is too high, a dense phase section of catalyst can't be formed in the expanded section, and the process requirements can't be met. By arranging an inner conveying pipe 13 having a greater inner diameter (i.e., an expanded section) in the second reaction zone 11b in the variable-diameter riser pipe 11, the above defects can be effectively overcome, and the following effects can be produced: firstly, when a turbulent bed is formed as the apparent gas velocity in the second reaction zone 11b is decreased, the catalyst at the top of the turbulent bed can be sucked away when the upper interface of the turbulent bed floods the bottom port of the inner conveying pipe 13, i.e., the height of the turbulent bed in the second reaction zone 11b can be controlled. Secondly, the upper part of the expanded section coaxial with the inner conveying pipe 13 in the upper part of the second reaction zone 11b can be used as a dilute phase section of the turbulent bed, and the gas carries a large amount of solid particles and scatters the solid particles to the dilute phase section above the turbulent bed, a free space for solid particles to settle is formed owing to the low gas flow rate, and the catalyst particles entrained by the turbulent bed will fall into the lower part of the second reaction zone 11b again, thereby the back mixing of the catalyst is enhanced; since a considerable amount of gas is stored in the free space, the free space can provide a buffer space for gas pulsation in the variable-diameter riser pipe 11; the above two effects can avoid heavy accumulation of catalyst and rapid increase and sharp fluctuation of gas pressure in the variable-diameter riser pipe 11 to a certain extent, and broaden the range of linear velocity of the gas for optimal operation in the second reaction zone 11b. Thirdly, the gas-solid fluidization in the second reaction zone 11b forms a turbulent bed, at the bottom of the turbulent bed, the solid phase is turbulent and continuous, the solid-gas ratio in unit space is high, the bubble diameter of solid particles in the turbulent bed is small, and the gas-solid contact efficiency is enhanced; generally, the gas-solid contact efficiency is higher than that in various conveying beds, and the device is suitable for use in some fields where the gas-solid contact efficiency may be further improved. Fourthly, if the gas velocity is greater than 2 m/s, since the gas velocity in the expanded section at the same level as the inner conveying pipe 13 is low, the catalyst scattered by the lower high-speed gas can drop in the second reaction zone 11b at the bottom, thereby the catalyst density at the bottom of the second reaction zone 11b is increased, and gas-solid mixing and contact are enhanced.

Compared with an existing MIP-CGP reactor, the inner conveying pipe 13 provided by the present disclosure changes the flow state of the gas and the catalyst in the second reaction zone 11b to a certain extent. the apparent velocity range of the gas in the second reaction zone 11b is wider; specifically, the apparent gas velocity in the expanded section of an existing MIP-CGP unit is 1.4-2.8 m/s, while the apparent gas velocity in an industrial operation device is generally preferred to be 1.5-2.0 m/s; in the multi-stage reaction unit 1 provided by the present disclosure, a dense phase section can be formed at the bottom of the second reaction zone 11b when the apparent gas velocity in the second reaction zone 11b is 0.7-3.5 m/s; a preferred operating range of apparent gas velocity is 0.9-2.5 m/s; correspondingly, in the present disclosure, the ratio of the inner diameter of the second reaction zone 11b to the inner diameter of the first reaction zone 11a is higher; preferably, the ratio of the inner diameter of the second reaction zone 11b to the inner diameter of the first reaction zone 11a is 2-5 : 1, more preferably 1.7-3.5 : 1.

In the present disclosure, when the catalytic cracking device is used, the multi-stage reaction unit 1 and the cracking reaction unit 2 are usually vertically arranged, the length direction of the variable-diameter riser pipe 11 is the vertical direction, the first reaction zone 11a, the second reaction zone 11b and the third reaction zone 11c are sequentially connected from bottom to top, the length direction of the cracking settler 23 is also the vertical direction, and the cracking stripping section 23a, the turbulent reaction section 23b and the cracking settling section 23c are sequentially connected from bottom to top; the multi-stage reaction settler 12 and the variable-diameter riser pipe 11 may be arranged coaxially or in parallel.

In the present disclosure, the multi-stage reaction settler 12 generally comprises a multi-stage reaction stripping section 12a and a multi-stage reaction settling section 12b that are arranged from bottom to top, and one stage or multiple stages of reaction cyclone separators 12c are provided in the multi-stage reaction settling section 12b, so that the material in the variable-diameter riser pipe 11 can be fed into the multi-stage reaction settling section 12b and separated by the multi-stage reaction cyclone separators 12c. The separated spent catalyst is fed into the multi-stage reaction stripping section 12a, stripped by multi-stage reaction stripping steam F, and then discharged; then the catalyst can be fed into a catalyst regenerator for regeneration by air scorching, and then is returned to the multi-stage reaction unit 1 for reuse.

The basic embodiment of the catalytic cracking device provided above comprises the following steps when it is applied to catalytic cracking:
Heavy raw materials atomized by means of steam are mixed with a multi-stage reaction catalyst at the bottom of the first reaction zone 11a to form a multi-stage reaction mixture; the multi-stage reaction mixture is inputted from the inlet of the first reaction zone 11a and fed upward through the first reaction zone 11a and the second reaction zone 11b sequentially; the multi-stage reaction mixture is retained for a longer time and is mixed and contact fully in the second reaction zone 11b owing to the diameter expansion of the second reaction zone 11b, thereby secondary reactions of the heavy oil and its intermediate fractions are completed fully; the mixture is fed into the third reaction zone 11c through the inner conveying pipe 13 for multi-stage catalytic reactions to obtain multi-stage reactants; the flow rate of the mixture is increased owing to the diameter reduction of the inner conveying pipe 13 and the raising conveying pipe of the third reaction zone 11c, so that the mixture enters the multi-stage reaction settler 12 quickly for multi-stage reaction separation to obtain multi-stage reaction oil and gas products and a spent multi-stage reaction catalyst; the spent multi-stage reaction catalyst with carbon after the reaction is discharged after steam stripping or directly discharged without steam stripping;
A cracking mixture formed by mixing light raw materials with a cracking catalyst is inputted from the inlet of the cracking riser pipe 21 and has a cracking catalytic reaction through the cracking riser pipe 21 to obtain cracking reactants; the cracking reactants are fed into the turbulent reaction section 23b for a turbulent reaction; then cracking separation is performed through the cracking settling section 23c and cracking stripping is performed through the cracking stripping section 23a to obtain cracking oil and gas products and a spent cracking catalyst; and
The spent cracking catalyst is fed into the second reaction zone 11b from the cracking catalyst outlet 25, and is mixed with the multi-stage reaction mixture to improve the activity and density of the multi-stage reaction catalyst in the second reaction zone 11b.

In the present disclosure, the heavy raw materials are petroleum hydrocarbons and/or other mineral oils, and the petroleum hydrocarbons are selected from at least one of vacuum gas oil (VGO), atmospheric gas oil (AGO), coker gas oil (CGO), deasphalted oil (DAO), vacuum residue (VR), atmospheric residue (AR) and hydrogenated heavy oil; the other mineral oils are selected from at least one of coal liquefied oil, oil sand oil and shale oil. Preferably, the heavy raw materials are selected from at least one of vacuum gas oil (VGO), atmospheric gas oil (AGO), coker gas oil (CGO), deasphalted oil (DAO), vacuum residue (VR), atmospheric residue (AR) and hydrogenated heavy oil; wherein VGO, AGO, CGO, DAO, VR and AR are unhydrogenated full-range fractions or partial fractions, or hydrogenated full-range fractions or partial fractions.

In the present disclosure, the light raw materials are selected from at least one of olefin-rich gasoline, diesel oil and C4-C8 light hydrocarbons that contain rich olefin or don't contain rich olefin, wherein the olefin-rich gasoline may be one of gasoline obtained through catalytic cracking with the device provided by the present disclosure, gasoline obtained through existing catalytic cracking, other gasoline obtained through catalytic cracking, coker gasoline, and gasoline obtained through thermal cracking, or a mixture of more than one of these substances; the light hydrocarbons that don't contain rich olefin may be selected from one of straight-run naphtha, straight-run gasoline, hydrogenated naphtha, C4-C8 alkanes, and raffinate oil, or a mixture of more than one of these substances.

In the present disclosure, the multi-stage reaction catalyst and cracking catalyst in the method may employ various catalytic cracking catalysts, catalysts with active components selected from one or more of Y-type or HY-type zeolite that contains or doesn't contain rare earth, ultrastable Y-type zeolite that contains or doesn't contain rare earth, ZSM-5 series zeolites, or silica-rich zeolite having a five-membered ring structure prepared with other methods, and amorphous silica-alumina catalysts. The multi-stage reaction catalyst and the cracking catalyst may use the same catalyst or different catalysts.

During the use of the above-mentioned device, in order to control the reaction temperature of the multi-stage reaction unit 1, a quenching agent may be injected at any position in the upper part of the first reaction zone 1la and the middle part of the second reaction zone 11b of the multi-stage reaction unit 1. Preferably, a quench oil and gas unit 9 is arranged from the top of the first reaction zone 11a to the bottom of the second reaction zone 11b. The quenching agent may be selected from at least one of water, recycled oil, gasoline, diesel oil and sump oil, the injection amount of the quenching agent is 1-10 wt.% of the amount of the catalytic raw materials (heavy raw materials), and the temperature of the quenching agent is 10-200°C, preferably 10-30°C.

In the present disclosure, most of the catalyst in the cracking reaction unit 2 falls into the turbulent reaction section 23b, so that the catalyst densities in the turbulent reaction section 23b and the cracking stripping section 23a are relatively high. By controlling the catalyst output at the bottom of the cracking settler 23, the catalyst in the middle and at the top of the cracking settler 23 gradually falls into the cracking stripping section 23a at the bottom, and the catalyst falling into the cracking stripping section 23a can be outputted from the cracking catalyst outlet 25 after steam stripping or directly outputted without steam stripping. The cracking catalyst outlet 25 is in communication with any position from the end of the first reaction zone 11a to the middle of the second reaction zone 11b through a pipeline, so as to input the spent cracking catalyst into the second reaction zone 11b of the variable-diameter riser pipe 11. In addition, a pipeline may be added to connect the cracking catalyst outlet 25 to a catalyst regenerator for recovery. Preferably, the cracking catalyst outlet 25 is located at the bottom of the cracking stripping section 23a and is in communication with the bottom of the second reaction zone 11b (the end close to the first reaction zone 11a) through a pipeline, and a slide valve may be arranged on the pipeline to adjust the amount of the spent cracking catalyst inputted into the second reaction zone 11b by controlling the opening of the slide valve, and adjust the catalyst remaining in the cracking settler 23.

In view that the cracking catalyst has low coke content and high temperature and still has high catalytic activity after it reacts with the light hydrocarbons, the cracking catalyst is fed into the second reaction zone 11b, so as to increase the flow rate and catalytic activity of the catalyst, thereby the catalytic reaction in the variable-diameter riser pipe 11 can be enhanced; the oil and gas from the reaction of the light hydrocarbons after separation by the cracking settler 23 don't enter the reaction zones of the variable-diameter riser pipe 11 for heavy oil reaction, therefore they don't affect the flow rate and velocity of the oil and gas in the second reaction zone 11b, and don't affect the gas-solid fluidization in the second reaction zone 11b. At the same time, the residence time of the light hydrocarbons in the high-temperature reaction zone in the cracking reaction unit 2 is shortened, thereby the degree of the thermal cracking reaction is decreased.

In the present disclosure, the inner diameter of the inner conveying pipe 13 is smaller than that of the second reaction zone 11b. Preferably, the ratio of the inner diameter of the inner conveying pipe 13 to the inner diameter of the third reaction zone 11c is 0.9-1.2 : 1, and more preferably, the ratio of the inner diameter of the inner conveying pipe 13 to the inner diameter of the third reaction zone 11c is 0.95-1.05 : 1, so that the inner diameter of the inner conveying pipe 13 is equivalent to the inner diameter of the third reaction zone 11c, so as to further widen the range of adjustment of the apparent linear velocity of the gas in the second reaction zone 11b, thereby the flow rates of the reacting oil and gas that can be borne by the multi-stage reaction unit 1 (representing the processing capacity of the device) can be adjusted or fluctuate within a wider range.

In the present disclosure, the length of the inner conveying pipe 13 is smaller than the length of the second reaction zone 11b, and the ratio of the length of the inner conveying pipe 13 to the length of the second reaction zone 11b is preferably 0.15-0.8 : 1, more preferably 0.2-0.6 : 1, thereby a better gas-solid fluidization state and a better turbulent effect can be achieved in the second reaction zone 11b. It may be noted that the second reaction zone 11b may be in a cylindrical shape, or a frustum shape with a diameter gradually expanding from bottom to top, or in a cylindrical shape with two or three stages of expanding diameters; the height of the second reaction zone 11b refers to the total height of the section inside the second reaction zone 11b, the height of the transition section between the second reaction zone 11b and the first reaction zone 11a, and the height of the transition section between the second reaction zone 11b and the third reaction zone 11c.

In the present disclosure, as a preferred embodiment of the inner conveying pipe 13, the distance between the bottom port of the inner conveying pipe 13 and the bottom of the second reaction zone 11b (i.e., the outlet of the first reaction zone 11a) is 2-8 m, preferably 3-6 m; the length of the inner conveying pipe 13 is 2-7 m, preferably 3-5 m; thus, the height of the turbulent bed in the second reaction zone 11b can be controlled better.

In the research on the catalyst particles in the variable-diameter riser pipe, especially in the expanded section, the inventor has found that the density of the particles in the expanded section in the axial direction is in a "S-shaped" distribution, i.e., thinner in the upper part and denser in the lower part, when viewed in the axial direction; though the height of the dense-phase section is influenced by the gas velocity and the particle conveying capacity, the dense-phase section is concentrated in the bottom section below 60% of the height of the expanded section. Viewed from the aspect of the distribution of the catalyst particles in the radial direction, at any cross section of the reactor, the maximum velocity of the catalyst particles is at the center of the riser pipe, and the velocity of the particles maintains a high and relatively constant value in the central area, decreases slowly from the center to the pipe wall; after the ratio of r/R (r represents the distance from the central axis and R is the radius of the pipe) reaches a certain value, the velocity of the particles decreases abruptly, and is almost zero near the side wall. The side wall effect exists in the entire variable-diameter riser pipe; in the lower part of the pneumatic conveying riser pipe, the gas velocity is above 10 m/s; in the regions where r/R is smaller than 0.8, the axial velocity of the catalyst particles is higher; however, in the expanded section, the side wall effect is more apparent because the apparent velocity of the gas is 1.5-3 m/s; in the lower part of the expanded section, the velocity of the catalyst particles is relatively high in the regions where r/R is smaller than 0.7, but the axial velocity of the catalyst particles in the regions near the side wall is zero or even negative; in the upper part of the expanded section, the velocity of the catalyst particles is high in the regions where r/R is smaller than 0.6, but the velocity of the catalyst particles is approximately zero in the regions near the side wall, i.e., a major part of the catalyst is suspended there, and this part of the catalyst may stay in the expanded section for excessively long time, and has an adverse effect on the process effect. On that basis, preferably, at least one inner conveying hole 13a is provided in the side wall of the inner conveying pipe 13, and the distance between the inner conveying hole 13a and the inlet of the third reaction zone 11c is 0.5-2 m. With the arrangement of the inner conveying hole 13a, the gas in the upper part of the second reaction zone 11b in the expanded section that is coaxial with the inner conveying pipe 13 in a flowing state, so as to prevent a dead zone without gas flow in the upper part of the second reaction zone 11b, thereby further improve the turbulent effect and the efficiency of catalytic reaction in the second reaction zone 11b.

In the present disclosure, a plurality of inner conveying holes 13a are preferably provided, and may be evenly distributed in the inner conveying pipe 13 in the circumferential direction. Further preferably, the ratio of the total area of the at least one inner conveying hole 13a to the cross-sectional area of the inner conveying pipe 13 is 0.05-0.3 : 1. The cross-sectional area of the inner conveying pipe 13 refers to the area of the cross-section perpendicular to the length direction of the inner conveying pipe 13.

In the present disclosure, the transition section between the first reaction zone 11a and the second reaction zone 11b and the transition section between the second reaction zone 11b and the third reaction zone 11c are dome-shaped or frustum-shaped, and are coaxially arranged with the entire multi-stage reaction unit 1. Preferably, the first reaction zone 11a, the second reaction zone 11b, the third reaction zone 11c and the inner conveying pipe 13 are coaxially arranged.

As a preferred embodiment, a ratio of the inner diameter of the first reaction zone 11a to the inner diameter of the second reaction zone 11b to the inner diameter of the third reaction zone 11c is 1 : 2-5 : 0.7-1.5, and a ratio of the length of the first reaction zone 11a to the length of the second reaction zone 11b to the length of the third reaction zone 11c is 1 : 0.3-2 : 0.5-2. In that way, it is more conducive to increasing the residence time of the oiling agents in the second reaction zone 11b and achieving comprehensive mixing and contact, thus the secondary reactions of heavy oil and its intermediate fractions can be fully completed.

In the present disclosure, the cracking settler 23 has a two-stage diameter expansion structure, the outer diameters of the cylinders of the cracking stripping section 23a, the turbulent reaction section 23b and the cracking settling section 23c increase sequentially, and the cracking riser pipe 21 is located in the turbulent reaction section 23b or the transition section between the turbulent reaction section 23b and the cracking settling section 23c. As a preferred embodiment of the cracking separator 23, the ratio of the inner diameter of the turbulent reaction section 23b to the inner diameter of the cracking stripping section 23a to the inner diameter of the cracking settling section 23c is 1 : 0.4-0.8 : 2.5-5, and the ratio of length of the turbulent reaction section 23b to the length of the cracking stripping section 23a to the length of the cracking settling section 23c is 1 : 1.5-3 : 1.5-4.

Thus, it is more conducive to achieving efficient and sufficient reaction of the light hydrocarbons and the catalyst in the turbulent reaction section 23b and efficient contact reaction of the light hydrocarbons and the catalyst at a lower temperature and a low air velocity.

In the present disclosure, the cracking riser pipe 21 and the cracking settler 23 of the cracking reaction unit 2 are preferably arranged coaxially.

As a preferred embodiment of the present disclosure, the ratio of the length of the variable-diameter riser pipe 11 to the cracking riser pipe 21 is 1 : 0.5-1.2, more preferably 1 : 0.6-1. The ratio of the inner diameter of the first reaction zone 11a in the variable-diameter riser pipe 11 to the inner diameter of the cracking riser pipe 21 is 1 : 0.2-1. Thus, a coupling effect between the multi-stage reaction unit 1 and the cracking reaction unit 2 can be realized better. Usually, the height of the variable-diameter riser pipe 11 in a medium-sized device in the laboratory is about 20 m; in industrial production, the height of the variable-diameter riser pipe 11 is about 40 m.

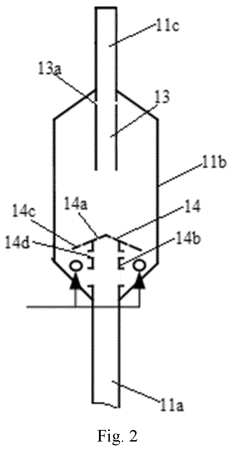

As another preferred embodiment of the present disclosure, as shown in Fig. 2, an inner distribution component 14 connected to the first reaction zone 11a is provided in the second reaction zone 11b, and the inner distribution component 14 is provided with a plurality of distribution holes 14a, which is to say, the inner distribution component 14 is a perforated distribution component. The main body of the inner distribution component 14 is located in the transition section between the first reaction zone 11a and the second reaction zone 11b, and its function is to quickly decrease the speed of the high-speed gas-solid particles in the first reaction zone 11a so that the gas-solid particles enter a gas-solid fluidization state required by the second reaction zone 11b.

In the present disclosure, the inner distribution component 14 may employ an open distribution plate with an opening ratio of 8-35%; alternatively, it may employ a cap-type distributor, which has a top part that is in a shape of mushroom head, cone or umbrella and outputs oil and gas through a side channel; the cap-type distributor may employ an existing umbrella-shaped distributor, a mushroom-shaped distributor or a conical cap-shaped distributor. Specifically, the inner distribution component 14 comprises a distribution cylinder 14b connected to the first reaction zone 11a and an end distribution plate 14c connected to the distribution cylinder 14b. Both the distribution cylinder 14b and the end distribution plate 14c are provided with distribution holes 14a, and the end distribution plate 14c is located at an end of the distribution cylinder 14b away from the first reaction zone 11a. The end distribution plate 14c may be umbrella-shaped or dome-shape, for example, it may employ an arch-shaped (convex) distribution plate, a special-shaped (basin-type) distribution plate, or a concave distribution plate.

As a preferred embodiment of the end distribution plate 14c, a ratio of the total area of the plurality of distribution holes 14a (i.e., the total area of the holes) in the end distribution plate 14c to the vertical projection area of the end distribution plate 14c is 0.1-0.3 : 1, so that the gas above the end distribution plate 14c can flow smoothly and accumulation of the catalyst on the end distribution plate 14c can be prevented. The vertical projection area of the end distribution plate 14c refers to the area occupied by the shadow of the outer contour of the end distribution plate 14c on the vertical plane after horizontal parallel light beams are irradiated on the end distribution plate 14c.

In the present disclosure, the distribution holes 14a in the distribution cylinder 14b may be rectangular or elliptical, and preferably, the ratio of the total area of the distribution holes 14a in the distribution cylinder 14b to the cross-sectional area of the first reaction zone 11a is 0.6-4 : 1; thus, deceleration and distribution effects of the high-speed gas-solid particles in the first reaction zone 11a can be improved better. The cross-sectional area of the first reaction zone 11a refers to the area of a cross-section perpendicular to the length direction of the first reaction zone 11a.

As a preferred embodiment of the distribution cylinder 14b, a side channel 14d extending to the outside of the distribution cylinder 14b is provided at the distribution holes 14a in the distribution cylinder 14b, and an open section of the side channel 14d away from the distribution cylinder 14b is a bevel surface facing the first reaction zone 11a. The shape of the cross-section of the side channel 14d (i.e., a cross-section perpendicular to the length direction of the side channel 14d) corresponds to the shape of the distribution holes 14a in the distribution cylinder 14b, and may be rectangular or elliptical. Usually, the open section of the side channel 14d away from the distribution cylinder 14b is not perpendicular to the axis of the side channel 14d, and the open section is a bevel surface facing the first reaction zone 11a, i.e., an extension line of the cross section forms an obliquely upward included angle with respect to the axis of the multi-stage reaction unit 1; the upper part of the open section is a part of the side channel 14d, so as to present the outlet of the side channel 14d from being blocked by the catalyst as far as possible and ensure the smoothness of the outlet of the side channel 14d.

As another preferred embodiment of the distribution cylinder 14b, the ratio of the area of the end distribution plate 14c to the cross-sectional area of the second reaction zone 11b is 0.7-0.85 : 1, so that the gas velocity at the edges of the end distribution plate 14c is 2.5 m/s or above, preferably 3.5 m/s or above, to ensure that catalyst accumulation will not occur at the bottom of the second reaction zone 11b or even in the transition section, thereby avoid operating accidents of the device. The area of the end distribution plate 14c is the projection area of the outer contour of the end distribution plate 14c, and the cross-sectional area of the second reaction zone 11b is the area of the cross-section perpendicular to the length direction of the second reaction zone 11b.

In the present disclosure, wear-resistant linings, such as ceramic wear-resistant linings, are mounted or coated in the inner conveying holes 13a and/or the distribution holes 14a.

In the present disclosure, to mix the raw materials with the catalyst fully, preferably, the variable-diameter riser pipe 11 further comprises a multi-stage reaction pre-rising section 11d connected to an inlet of the first reaction zone 11a, and the cracking riser pipe 21 comprises a cracking pre-rising section 21b and a cracking reaction section 21a that are sequentially connected in series in its length direction, an outlet of the cracking reaction section 21a is located at an end of the turbulent reaction section 23b near the cracking stripping section 23a, a transition section between the multi-stage reaction pre-rising section 11d and the first reaction zone 11a is in communication with a multi-stage reaction feeding unit 7, and a transition section between the cracking pre-rising section 21b and the cracking reaction section 21a is in communication with a cracking feeding unit 8. A multi-stage reaction pre-raising gas A is injected through the multi-stage reaction pre-rising section 11d, mixed with the multi-stage reaction catalyst, and then flows upward; heavy raw materials atomized by water vapor are fed into the variable-diameter riser pipe 11 from the multi-stage reaction feeding unit 7, so that the heavy raw materials and the multi-stage reaction catalyst contact and react with each other in the first reaction zone 11a; a cracking pre-rising gas B is injected through the cracking pre-rising section 21b, mixed with the cracking catalyst, and then flows upward; light raw materials atomized by water vapor are fed into the cracking riser pipe 21 from the cracking feeding unit 8, so that the light raw materials and the cracking catalyst contact and react with each other in the cracking reaction section 21a.

In the present disclosure, in order to improve the effect of contact between the catalyst and the light hydrocarbons after the light hydrocarbon reaction mixture is fed into the turbulent reaction section 23b and improve the efficiency of catalytic reaction, preferably a cracking distributor 22 is provided at the outlet of the cracking reaction section 21a.

In the present disclosure, the gas phase outlet of the cracking settling section 23c may be led to the main oil and gas pipelines or may be in communication with the multi-stage reaction settler 12. For example, a gas collection chamber is provided at the top of the multi-stage reaction settler 12, and the gas phase outlet of the cracking settling section 23c is in communication with the gas collection chamber through the cracking gas phase conveying pipe 24, so that the post-reaction oil and gas E (including post-reaction oil and gas from the heavy raw materials and post-reaction oil and gas from the light raw materials) are discharged from the gas collection chamber. A stripping steam unit 10 may be provided at the bottom of the cracking stripping section 23a to introduce steam for stripping the catalyst in the cracking stripping section 23a.

When the catalytic cracking device provided by the present disclosure is used, the multi-stage reaction unit 1 and the cracking reaction unit may be equipped with a corresponding catalyst regenerator respectively; in the case that the multi-stage reaction catalyst and the cracking catalyst are the same, the multi-stage reaction unit 1 and the cracking reaction unit may share the same catalyst regenerator. As a preferred embodiment of the present disclosure, the device further comprises a regeneration unit 3, the multi-stage reaction settler 12 is provided with a multi-stage reaction catalyst outlet 15 in communication with a feeding inlet of the regeneration unit 3, and a regenerated catalyst outlet 31 of the regeneration unit 3 is in communication with the variable-diameter riser pipe 11 and/or the cracking riser pipe 21. the cracking catalyst outlet 25 is not only in communication with the second reaction zone 11b, but also in communication with the feeding inlet of the regeneration unit 3, so as to directly input a part of the spent catalyst from the cracking reaction unit 2 into the regeneration unit 3.

In the present disclosure, a regeneration cyclone separator 32 is provided in the regeneration unit 3, and a regeneration air inlet 33 is arranged at the bottom of the regeneration cyclone separator 32 and a regeneration flue gas outlet 34 is arranged at the top of the regeneration cyclone separator 32. The spent catalyst is fed into the regeneration unit 3 through a spent catalyst pipeline 5 and contacts with regeneration air C introduced from the regeneration air inlet 33 for an oxidation reaction, and the regeneration flue gas D is outputted from the regeneration flue gas outlet 34 into a flue gas turbine for further energy recovery and treatment; the high-temperature regenerated catalyst generated by burning coke is fed into a catalyst cooler 4 through a regeneration pipeline 6, and low-temperature water vapor G is introduced into the catalyst cooler 4 from a heat-collecting steam inlet to collect heat from the regenerated catalyst, so that the water vapor becomes high-temperature water vapor H, and is outputted from a heat-collecting steam outlet. The cooled regenerated catalyst flows back to the bottom of the first reaction zone 11a and the bottom of the cracking riser pipe 21 through the regeneration pipeline 6 for reuse.

In the present disclosure, the regenerated catalyst outputted from the regenerated catalyst outlet 31 is used as a part or all of the multi-stage reaction catalyst and a part or all of the cracking catalyst.

Based on the catalytic cracking device provided above, in a second aspect, the present disclosure provides a method for applying the device for catalytic cracking. The method comprises the following steps:
inputting a multi-stage reaction mixture formed by mixing heavy raw materials with a multi-stage reaction catalyst from the inlet of the first reaction zone 11a into the first reaction zone 11a and the second reaction zone 11b sequentially, and then into the third reaction zone 11c through the inner conveying pipe 13 for multi-stage catalytic reactions to obtain multi-stage reactants, and performing multi-stage reaction separation on the multi-stage reactants through the multi-stage reaction settler 12 to obtain multi-stage reaction oil and gas products and a spent multi-stage reaction catalyst;
inputting a cracking mixture formed by mixing light raw materials with a cracking catalyst from the inlet of the cracking riser pipe 21 and performing a cracking catalytic reaction through the cracking riser pipe 21 to obtain cracking reactants, feeding the cracking reactants into the turbulent reaction section 23b for a turbulent reaction, then performing cracking separation through the cracking settling section 23c and cracking stripping through the cracking stripping section 23a to obtain cracking oil and gas products and a spent cracking catalyst; and
inputting the spent cracking catalyst into the second reaction zone 11b from the cracking catalyst outlet 25 to mix it with the multi-stage reaction mixture.

The device and the method provided by the present disclosure have a variety of operating modes. For example, in an ultra-low olefin gasoline operating mode, the multi-stage reaction unit 1 employs a catalyst that can be used to produce more gasolines and has an olefin reduction function, measures such as controlling the amount of circulated catalyst, controlling the amount of injected quenching agent in the quenching oil and gas unit 9, supplementing an appropriate amount of regenerant or cooled regenerant (the temperature is usually 560-660°C) or carbon-containing spent catalyst with carbon content less than 0.5% at the bottom part or middle part of the second reaction zone 11b or not, etc., are taken, and the temperature in the second reaction zone 11b is controlled at 510-540°C, optimally 515-530°C, the inlet temperature of the inner conveying pipe 13 is controlled at 510-540°C, optimally 515-530°C, so that ultra-low olefin gasoline can be produced;
At the same time, the cracking reaction unit 2 cracks various olefin-rich catalytic light gasolines, coker gasolines, etc., so as to further reduce the amount of high olefin gasolines in the entire plant and reduce the olefin content in the gasoline pool of the entire plant; the outlet temperature of the cracking riser pipe 21 is controlled at 540-620°C, preferably 560-600°C.

For another example, in an operating mode for producing more cracked gas, the multi-stage reaction unit 1 employs a catalytic cracking catalyst for producing more cracked gas, an appropriate amount of regenerant or cooled regenerant (the temperature is usually 580-680°C) or carbon-containing spent catalyst with carbon content less than 0.5% (the temperature is usually 580-680°C) is supplemented at the bottom part or middle part of the second reaction zone 11b or not, the temperature in the second reaction zone 11b is controlled at 560-660°C, optimally 560-600°C, the inlet temperature of the inner conveying pipe 13 is controlled at 550-640°C, optimally 560-600°C, so that more cracked gas can be produced;
At the same time, the cracking reaction unit 2 recycles light hydrocarbons rich in C4-C8 olefins, or gasolines or diesel oils, and the outlet temperature of the cracking riser pipe 21 is controlled at 560-660°C, preferably 580-640°C; thus, the yield of cracked gases in the entire plant can be further improved, i.e., the yield of raw materials needed by light hydrocarbon processing devices, such as MTBE, light gasoline acidification and polypropylene processing devices, can be improved, and the portfolios of refined products in the entire plant can be adjusted.

In the present disclosure, the temperature of the regenerated catalysts before the heavy raw materials or light raw materials contact with the catalysts (i.e., oiling agents) is 660-760°C.

Based on the device and method provided by the present disclosure, the apparent residence time of oil and gas of the multi-stage reaction mixture is 0.8-2s in the first reaction zone 11a, 5-15s in the second reaction zone 11b, and 0.5-1.5s in the third reaction zone 11c; the residence time of the cracking mixture in the cracking riser pipe 21 is 0.8-3.5s, more preferably 1-2.5s; the residence time in the turbulent reaction section 23b is 3-13s.

As a relatively preferred embodiment of the catalytic cracking device in the present disclosure, the catalytic cracking device comprises a multi-stage reaction unit 1, a cracking reaction unit 2 and a regeneration unit 3, wherein the multi-stage reaction unit 1 comprises a variable-diameter riser pipe 11 and a multi-stage reaction settler 12; the variable-diameter riser pipe 11 comprises a multi-stage reaction pre-rising section 11d, a first reaction zone 11a, a second reaction zone 11b and a third reaction zone 11c that are sequentially connected in series and arranged coaxially in its length direction; an outlet of the third reaction zone 11c is in communication with a multi-stage reaction settler 12; a quench oil and gas unit 9 is provided from the top of the first reaction zone 11a to the bottom of the second reaction zone 11b; a ratio of the inner diameter of the first reaction zone 11a to the inner diameter of the second reaction zone 11b to the inner diameter of the third reaction zone 11c is 1 : 2-5 : 0.7-1.5, and a ratio of the length of the first reaction zone 11a to the length of the second reaction zone 11b to the length of the third reaction zone 11c is 1 : 0.3-2 : 0.5-2; an inner conveying pipe 13 extending into the second reaction zone 11b is provided at the connection between the third reaction zone 11c and the second reaction zone 11b, a ratio of the inner diameter of the inner conveying pipe 13 to the inner diameter of the third reaction zone 11c is 0.9-1.2 : 1, and a ratio of the length of the inner conveying pipe 13 to the length of the second reaction zone 11b is 0.15-0.8 : 1; the side wall of the inner conveying pipe 13 is provided with a plurality of inner conveying holes 13a, the distance between the inner conveying holes 13a and the inlet of the third reaction zone 11c is 0.5-2 m, and a ratio of the total area of the inner conveying holes 13a to the cross-sectional area of the inner conveying pipe 13 is 0.05-0.3 : 1; an inner distribution component 14 connected to the first reaction zone 11a is provided inside the second reaction zone 11b, and the inner distribution component 14 comprises a distribution cylinder 14b connected to the first reaction zone 11a and an end distribution plate 14c connected to the distribution cylinder 14b, wherein both the distribution cylinder 14b and the end distribution plate 14c are provided with a plurality of distribution holes 14a, the end distribution plate 14c is located at an end of the distribution cylinder 14b away from the first reaction zone 11a, a ratio of the area of the end distribution plate 14c to the cross-sectional area of the second reaction zone 11b is 0.7-0.85 : 1, a ratio of the total area of the plurality of distribution holes 14a in the end distribution plate 14c to the vertical projection area of the end distribution plate 14c is 0.1-0.3 : 1, and a ratio of the total area of the distribution holes 14a in the distribution cylinder 14b to the cross-sectional area of the first reaction zone 11a is 0.6-4 : 1; a side channel 14d extending to the outside of the distribution cylinder 14b is arranged at the distribution holes 14a in the distribution cylinder 14b, an open section of the side channel 14d away from the distribution cylinder 14b is a bevel surface facing the first reaction zone 11a; and a transition section between the multi-stage reaction pre-rising section 11d and the first reaction zone 11a is in communication with the multi-stage reaction feeding unit 7; the multi-stage reaction settler 12 comprises a multi-stage reaction stripping section 12a and a multi-stage reaction settling section 12b that are arranged from bottom to top, wherein one stage or multiple stages of reaction cyclone separators 12c are provided in the multi-stage reaction settling section 12b, and a multi-stage reaction catalyst outlet 15 is arranged at the bottom of the multi-stage reaction stripping section 12a;
The cracking reaction unit 2 comprises a cracking riser pipe 21 and a cracking settler 23 that are coaxially arranged, wherein the cracking riser pipe 21 comprises a cracking pre-rising section 21b and a cracking reaction section 21a that are sequentially connected in series in its length direction; a transition section between the cracking pre-rising section 21b and the cracking reaction section 21a is in communication with a cracking feeding unit 8; the cracking settler 23 comprises a cracking stripping section 23a, a turbulent reaction section 23b and a cracking settling section 23c that are arranged sequentially in its length direction, an outlet of the cracking reaction section 21a is located at an end of the turbulent reaction section 23b near the cracking stripping section 23a, and the outlet of the cracking reaction section 21a is provided with a cracking distributor 22; a cracking catalyst outlet 25 in communication with the bottom of the second reaction zone 11b is provided at the bottom of the cracking stripping section 23a; a ratio of the inner diameter of the turbulent reaction section 23b to the inner diameter of the cracking stripping section 23a to the inner diameter of the cracking settling section 23c is 1 : 0.4-0.8 : 2.5-5, and a ratio of the length of the turbulent reaction section 23b to the length of the cracking stripping section 23a to the length of the cracking settling section 23c is 1 : 1.5-3 : 1.5-4; one stage or two stages of cracking cyclone separators 23d are provided in the cracking settling section 23c, a gas phase outlet of the cracking settling section 23c is in communication with a gas collection chamber at the top of the multi-stage reaction settler 12 through a cracking gas phase conveying pipe 24, and a stripping steam unit 10 is provided at the bottom of the cracking stripping section 23a;
A regeneration cyclone separator 32 is provided in the regeneration unit 3, a regenerated catalyst outlet 31 is arranged on the side wall of the regeneration cyclone separator 32, a regeneration air inlet 33 is arranged at the bottom of the regeneration cyclone separator 32 and a regeneration flue gas outlet 34 is arranged at the top of the regeneration cyclone separator 32; both the multi-stage reaction catalyst outlet 15 and the cracking catalyst outlet 25 are in communication with a feeding inlet of the regeneration unit 3 through a spent catalyst pipeline 5; the regenerated catalyst outlet 31 is in communication with the multi-stage reaction pre-rising section 11d and the cracking pre-rising section 21b through a regeneration pipeline 6, and a catalyst cooler 4 is arranged on the regeneration pipeline 6;
A ratio of the length of the variable-diameter riser pipe 11 to the length of the cracking riser pipe 21 is 1 : 0.5-1.2, and wear-resistant linings are mounted or coated in the inner conveying holes 13a and the distribution holes 14a.

The present disclosure will be described in detail below in examples.

In the following examples, the heavy raw materials (heavy oils), the light hydrocarbon I and the light hydrocarbon II are provided by a refinery of China Petrochemical Corporation, the catalyst I and the catalyst II are provided by Sinopec Catalyst Co., Ltd., and the product distribution and gasoline composition are tested by chromatography. Unless otherwise specified, the rest raw materials are existing commercial products, and all parameters involved are determined with corresponding existing methods.

### Example 1

A relatively preferred embodiment of the catalytic cracking device provided above is used, and the heavy feed oils in Table 1 are processed with the catalyst I in Table 2 to produce ultra-low olefin gasolines. The properties of the raw materials in Example 1 are shown in Table 1. A light hydrocarbon A is used as the light raw material for recycled light gasoline, which accounts for 30% of the heavy raw materials, wherein one half of the recycled light gasoline is light gasoline produced by the device, and the other half is introduced from other devices outside the present device.

In the device provided in Example 1, the total length of the variable-diameter riser pipe 11 is about 18 meters; the multi-stage reaction pre-rising section 11d is in diameter of 0.25 meters and height of 1.5 meters; the first reaction zone 11a is in diameter of 0.30 meters and height of 4 meters; the second reaction zone 11b is in diameter of 1.2 meters and height of 7.6 meters, and the inner conveying pipe 13 is in diameter of 0.30 meters and height of 2.5 meters; the third reaction zone 11c is in diameter of 0.30 meters and height of 4 meters; the longitudinal cross section of the connection between the first reaction zone 11a and the second reaction zone 11b is in a shape of an isosceles trapezoid, the included angle between the sides and the axis of the isosceles trapezoid is 45 degrees, and the height of the isosceles trapezoid is 0.45 meters: the longitudinal cross section of the connection between the second reaction zone 11b and the third reaction zone 11c is in a shape of an isosceles trapezoid, the included angle between the sides and the axis of the isosceles trapezoid is 45 degrees, and the height of the isosceles trapezoid is 0.45 meters; the distance between the inner conveying holes 13a and the inlet of the third reaction zone 11c is 1 meter, the ratio of the total area of the plurality of inner conveying holes 13a to the cross-sectional area of the inner conveying pipe 13 is 0.2 : 1, the inner distribution component 14 forms a cap-shaped inner distribution component, the ratio of the area of the end distribution plate 14c to the cross-sectional area of the second reaction zone 11b is 0.8 : 1, the ratio of the total area of the plurality of distribution holes 14a in the end distribution plate 14c to the vertical projection area of the end distribution plate 14c is 0.2 : 1, and the ratio of the total area of the distribution holes 14a in the distribution cylinder 14b to the cross-sectional area of the first reaction zone 11a is 2 : 1;
The cracking riser pipe 21 is in total height of 13 meters, wherein the cracking pre-rising section 21b is in height of 2 meters and diameter of 0.12 meters, the cracking reaction section 21a is in height of 11 meters and diameter of 0.15 meters, the cracking stripping section 23a is in height of 3 meters and diameter of 0.35 meters, the turbulent reaction section 23b is in height of 1.5 meters and diameter of 0.5 meters, the cracking settling section 23c is in height of 2.5 meters and diameter of 1.3 meters, and the cracking gas phase conveying pipe 24 is in diameter of 0.2 meters.

A multi-stage reaction pre-raising gas A introduced from the bottom of the multi-stage reaction pre-rising section 11d is mixed with the regenerated catalyst (catalyst D) directly conveyed from the catalyst cooler 4 or regeneration unit 3 through the regeneration pipeline 6 and the mixture is conveyed upward; at the connection between the top of the multi-stage reaction pre-rising section 11d and the main body of the first reaction zone 11a, heavy raw materials atomized by means of steam are fed into the variable-diameter riser pipe 11 by a heavy oil feeding system 7, and contact and react with oiling agents in the first reaction zone 11a, and then the reactants are fed upward into the second reaction zone 11b along the variable-diameter riser pipe 11 through the inner distribution component 14; owing to the decreased apparent velocity of the oil and gas and the diversion of the oil and gas, the catalyst is in a state of a turbulent bed or dense phase conveying bed in the second reaction zone 11b, thus, the contact with the oiling agents is enhanced; in the transition section between the second reaction zone 11b and the first reaction zone 11a, a quenching agent can be injected from a quench oil and gas unit 9, and the spent catalyst outputted from the cracking catalyst outlet 25 can be injected from the bottom of the second reaction zone 11b to supplement the catalyst activity in the second reaction zone 11b;
A cracking pre-raising gas B injected from the bottom of the cracking pre-rising section 21b is mixed with the regenerated catalyst (catalyst I) directly introduced from the catalyst cooler 4 or the regeneration unit 3 and the mixture is conveyed upward; at the connection between the top of the cracking pre-rising section 21b and the cracking reaction section 21a, light raw materials (light hydrocarbon I) atomized by means of steam or directly atomized mechanically are introduced into the cracking riser pipe 21 through the cracking feed unit 8, and the light raw materials contact and react with the catalyst in the cracking reaction section 21a and the reactants are conveyed upward and fed to the bottom of the turbulent reaction section 23b through the cracking distributor 22 at the top end of the cracking reaction section 21a to separate the reacted oil and gas from the catalyst; the catalyst is fed into the second reaction zone 11b through the cracking catalyst outlet 25 after it is stripped by the steam introduced from the stripping steam unit 10 at the bottom of the cracking stripping section 23a, or is directly fed into the second reaction zone 11b without being stripped; the separated post-reaction oil and gas from the light hydrocarbons are fed into the gas collection chamber at the top of the multi-stage reaction settler 12 through the light hydrocarbon conveying pipe on the cracking settling section 23c or directly fed into the multi-stage reaction settler 12; the multi-stage reaction mixture in the second reaction zone 11b is fully mixed and contacts with the post-reaction spent catalyst in the cracking riser pipe 21 and then is redistributed, and fed into the third reaction zone 11c through the inner conveying pipe 13 that has a reduced diameter relative to the second reaction zone 11b; the top of the third reaction zone 11c is in communication with the multi-stage reaction cyclone separator 12c in the multi-stage reaction settling section 12b, and multi-stage reaction separation is performed there; the post-reaction oil and gas from the heavy raw materials are outputted from the top of the multi-stage reaction cyclone separator 12c, and then are transferred to an oil and gas fractionating tower from the bottom of the multi-stage reaction settler 12 through a main oil transfer pipeline; the catalyst containing coke after the reaction of the heavy raw materials is fed into the multi-stage reaction stripping section 12a at the bottom of the multi-stage reaction settler 12 from the conveying pipe at the lower part of the multistage reaction cyclone separator 12c, and the spent catalyst stripped by means of multi-stage reaction stripping steam F is fed into the regeneration unit 3 through the spent catalyst pipeline 5, and contacted with the regeneration air C introduced from the bottom of the regeneration unit 3 for an oxidation reaction, and the regeneration flue gas D is outputted from the top of the regeneration unit 3 to a flue gas turbine for further energy recovery and treatment; the high-temperature regenerated catalyst generated by burning coke is fed into the catalyst cooler 4 through the regeneration pipeline 6, and low-temperature water vapor G is heated into high-temperature water vapor H; the cooled regenerated catalyst flows back to the bottom of the first reaction zone 11a and the bottom of the cracking riser pipe 21 from the catalyst cooler 4 through the regeneration pipeline 6 for reuse.

The rest operating conditions, the distribution of obtained products and the main properties of the gasolines are shown in Table 3.

### Comparative Example 1

The catalytic cracking unit includes the multi-stage reaction unit 1 used in Example 1 and an existing cracking unit. The cracking unit employs an existing riser pipe without a cracking settler, and the riser pipe is directly connected with a cyclone separator. The heavy feed oils in Table 1 are processed with the catalyst I in Table 2 to produce ultra-low olefin gasolines. The parameters of the multi-stage reaction unit 1 are the same as those in Example 1, and the outlet temperature of the riser pipe of the cracking unit is the same as that of the cracking riser pipe 21 in Example 1.

The rest operating conditions, the distribution of obtained products and the main properties of the gasolines are shown in Table 3.

### Comparative Example 2

The catalytic cracking device includes the multi-stage reaction unit 1 described in Example 1, but there is no cracking reaction unit 2 and the light hydrocarbons are not recycled. The heavy feed oils in Table 1 are processed with the catalyst I in Table 2 to produce ultra-low olefin gasolines; the parameters of the multi-stage reaction unit 1 are the same as those in Example 1.

The rest operating conditions, the distribution of obtained products and the main properties of the gasolines are shown in Table 3.

### Comparative Example 3

The catalytic cracking device includes the multi-stage reaction unit 1 used in Example 1, but there is no cracking reaction unit 2, the light hydrocarbons are not recycled, and the second reaction zone 11b is in diameter of 0.9 meters, and no inner conveying pipe 13 is provided in the second reaction zone 11b, while other parameters of the multi-stage reaction unit 1 are the same as those in the comparative example 2. The heavy feed oils in Table 1 are processed with the catalyst I to produce low-olefin gasolines.

The rest operating conditions, the distribution of obtained products and the main properties of the gasolines are shown in Table 3.

### Example 2

Compared with Example 1, the structural parameters of the catalytic cracking device used in this example are essentially the same as those in Example 1, except that the inner distribution component 14 connecting the first reaction zone 11a and the second reaction zone 11b is a mushroom-head distributor, and catalyst II in Table 2 is used as the catalyst, and the operating conditions are different. The properties of the raw materials in this example are shown in Table 1. A light hydrocarbon II is used as the light raw material for recycled light gasoline, which accounts for 30% of the heavy raw materials, wherein one half of the recycled light gasoline is light gasoline produced by the device, and the other half is introduced from other devices outside the present device.

The rest operating conditions, the distribution of obtained products and the main properties of the gasolines are shown in Table 3.

### Comparative Example 4

The catalytic cracking unit includes the multi-stage reaction unit 1 used in Example 1 and an existing cracking unit. The cracking unit employs an existing riser pipe without a cracking settler, and the riser pipe is directly connected with a cyclone separator. The heavy feed oils in Table 1 are processed with the catalyst II in Table 2 to produce more cracked gases. The parameters of the multi-stage reaction unit 1 are the same as those in Example 2, and the outlet temperature of the riser pipe of the cracking unit is the same as that of the cracking riser pipe 21 in Example 1.

The rest operating conditions, the distribution of obtained products and the main properties of the gasolines are shown in Table 3.

### Comparative Example 5

The catalytic cracking device includes the multi-stage reaction unit 1 used in Example 1, but there is no cracking reaction unit 2 and the light hydrocarbons are not recycled. The heavy feed oils in Table 1 are processed with the catalyst II in Table 2 to produce more cracked gases. The parameters of the multi-stage reaction unit 1 are the same as those in Example 2.

The rest operating conditions, the distribution of obtained products and the main properties of the gasolines are shown in Table 3.

### Comparative Example 6

The catalytic cracking device includes the multi-stage reaction unit 1 used in Example 1, but there is no cracking reaction unit 2, the light hydrocarbons are not recycled, and the second reaction zone 11b is in diameter of 0.9 meters, and no inner conveying pipe 13 is provided in the second reaction zone 11b, while other parameters of the multi-stage reaction unit 1 are the same as those in the comparative example 5.

The rest operating conditions, the distribution of obtained products and the main properties of the gasolines are shown in Table 3.

**Table 1 - Properties of Raw Materials**

| **Item** | **Heavy Raw Material** | **Light Hydrocarbon I** | **Light Hydrocarbon II** |
|---|---|---|---|
| Density (@20°C), kg/m³ | 0.8954 | 0.7121 | 0.7243 |
| Carbon residue, wt.% | 2 | -- | -- |

| **Analysis of elements** | | | |
|---|---|---|---|
| Carbon content, wt.% | 86.85 | 86.46 | 86.67 |
| Hydrogen content, wt.% | 12.58 | 13.46 | 13.22 |
| Sulfur content, wt.% | 0.37 | -- | -- |
| Nitrogen content, wt.% | 0.27 | -- | -- |

| **Analysis of hydrocarbon group composition** | | | |
|---|---|---|---|
| Saturated hydrocarbons, wt.% | 68.24 | -- | -- |
| Aromatic hydrocarbons, wt.% | 20.09 | -- | -- |
| Colloids, wt.% | 10.72 | -- | -- |
| Asphaltenes, wt.% | 0.95 | -- | -- |
| Ni content, µg/g | 4.3 | -- | -- |
| V content, µg/g | 0.3 | -- | -- |

| **PONA,wt.%** | | | |
|---|---|---|---|
| P | -- | 6 | 4 |
| I | -- | 26 | 13 |
| O | -- | 49 | 62 |
| N | -- | 4 | 3 |
| A | -- | 15 | 18 |

**Table 2 - Properties of Catalysts**

| **Main Catalyst** | **Catalyst I** | **Catalyst II** |
|---|---|---|
| Type of zeolite | Mainly ReHY | Mainly ZSM-5 |

| **Chemical composition, wt.%** | | |
|---|---|---|
| Aluminum oxide | 46.4 | 52.1 |
| Sodium oxide | 0.22 | 0.15 |

| **Size composition, wt.%** | | |
|---|---|---|
| 0-40µm | 20.23 | 25.54 |
| 40-80µm | 52.12 | 48.05 |
| >110µm | -- | 26.41 |
| Specific surface area / m²·g⁻¹ | 165 | 210 |
| Deposition density / g·cm⁻³ | 0.76 | 0.79 |
| Apparent density / g·cm⁻³ | 0.71 | 0.75 |
| Micro-activity, % | 68 | 58 |
| Size composition, wt.% | 0.38 | 0.28 |

**Table 3 - Operating Conditions and Product Distribution**

| | Example 1 | Comparative Example 1 | Comparative Example 2 | Comparative Example 3 | Exampl e2 | Comparative Example 4 | Comparative Example 5 | Comparative Example 6 |
|---|---|---|---|---|---|---|---|---|
| Inner conveying pipe | Yes | Yes | Yes | No | Yes | Yes | Yes | No |
| Reducing ratio of the second reaction zone to the first reaction zone | 4 | 4 | 4 | 3 | 4 | 4 | 4 | 3 |

| **Outlet temperature of the multi-stage reaction unit, °C** | | | | | | | | |
|---|---|---|---|---|---|---|---|---|
| First reaction zone | 525 | 525 | 525 | 525 | 579 | 579 | 579 | 578 |
| Second reaction zone | 519 | 519 | 516 | 517 | 561 | 561 | 560 | 566 |
| Third reaction zone | 516 | 517 | 515 | 516 | 558 | 558 | 557 | 563 |

| **Residence time of oil and gas in the multi-stage reaction unit, s** | | | | | | | | |
|---|---|---|---|---|---|---|---|---|
| First reaction zone | 1 | 1 | 1 | 1 | 0.9 | 0.9 | 0.9 | 0.9 |
| Second reaction zone | 8.6 | 8.5 | 8.8 | 5.6 | 8.7 | 8.7 | 9 | 5.9 |
| Third reaction zone | 0.5 | 0.5 | 0.6 | 0.6 | 0.5 | 0.5 | 0.6 | 0.6 |
| Ratio of heavy oil to catalyst | 6.6 | 6.6 | 6.6 | 6.6 | 10.5 | 10.5 | 10.5 | 10.5 |
| Recycling ratio of light hydrocarbons, wt.% | 30 | 30 | -- | -- | 30 | 30 | -- | -- |
| Outlet temperature of cracking riser pipe, °C | 559 | 559 | -- | -- | 602 | 602 | -- | -- |
| Temperature in | 555 | -- | -- | -- | 596 | -- | -- | -- |
| turbulent reaction section, °C | | | | | | | | |
| Reaction time in cracking reaction section of light hydrocarbons, s | 1.7 | 1.7 | -- | -- | 1.3 | 1.3 | -- | -- |
| Reaction time in turbulent reaction section of light hydrocarbons, s | 5 | -- | -- | -- | 4.5 | -- | -- | -- |
| Ratio of oil to catalyst of light hydrocarbons | 6 | 6 | -- | -- | 8 | 8 | -- | -- |

| **Product distribution, wt.%** | | | | | | | | |
|---|---|---|---|---|---|---|---|---|
| Dry gas | 3.1 | 2.9 | 2.8 | 3.6 | 11.3 | 10.8 | 10.5 | 103 |
| Liquefied gas | 18.1 | 16.9 | 16.4 | 15.3 | 44.9 | 42.6 | 40.3 | 38.2 |
| Propylene | 5.8 | 5.3 | 5.1 | 4.7 | 19.6 | 18.3 | 17.0 | 15.1 |
| Gasoline | 50.8 | 51.9 | 46.9 | 45.2 | 23.8 | 26.2 | 24.1 | 24.2 |
| Diesel oil | 19.4 | 19.9 | 24.4 | 25.3 | 10.2 | 10.9 | 14.5 | 15.9 |
| Heavy oil | 0.5 | 0.5 | 0.9 | 1.8 | 0.4 | 0.4 | 0.8 | 1.4 |
| Coke | 7.7 | 7.5 | 8.1 | 8.3 | 8.8 | 8.5 | 9.1 | 9.3 |
| Loss | 0.4 | 0.4 | 0.5 | 0.5 | 0.6 | 0.6 | 0.7 | 0.7 |

| **Composition of gasoline group, wt. %** | | | | | | | | |
|---|---|---|---|---|---|---|---|---|
| N-alkanes | 7.9 | 8.3 | 7.8 | 8.6 | 5.4 | 5.5 | 4.5 | 4.3 |
| Iso-alkanes | 42.4 | 41.3 | 38.2 | 36.1 | 26.8 | 24.5 | 16.5 | 15.7 |
| Cycloalkanes | 5.8 | 6.1 | 7.1 | 7.2 | 3.9 | 4.1 | 4.5 | 4.2 |
| Alkenes | 19.6 | 22.2 | 23.5 | 26 | 33.8 | 37.1 | 45 | 47.6 |
| Aromatic hydrocarbons | 24.3 | 22.1 | 23.4 | 22.1 | 30.1 | 28.8 | 29.5 | 28.2 |

As can be seen from Table 3, all of the Example 1, the Comparative Example 1, the Comparative Example 2 and the Comparative Example 3 are in an operating mode for producing ultra-low olefin gasolines; 30% of the light hydrocarbon I is recycled in the Example 1 and the Comparative Example 1, and a half of the light hydrocarbon I comes from olefin-rich light gasolines outside the device; gasoline is not recycled in the Comparative Examples 2 and 3; compared with the Comparative Example 1, the Comparative Example 2 and the Comparative Example 3, in the Example 1, the olefin content in the gasoline is decreased by 2.6%, 3.6% and 6.4% respectively, and the yield of propylene is increased by 0.5%, 0.7% and 1.1% respectively, which indicate that the device and method provided by the present disclosure can reduce the olefin content in the gasoline significantly and increase the yield of propylene moderately.

All of the Example 2, the Comparative Example 4, the Comparative Example 5 and the Comparative Example 6 are in an operating mode for producing more cracked gases; 30% of the light hydrocarbon II is recycled in the Example 2 and the Comparative Example 4, and one half of the light hydrocarbon comes from olefin-rich light gasolines outside the device; gasoline is not recycled in the Comparative Examples 5 and 6; compared with the Comparative Example 4, the Comparative Example 5 and the Comparative Example 6, in the Example 2, the olefin content in the gasoline is decreased by 3.3%, 11.2% and 13.8% respectively, and the yield of propylene is increased by 1.3%, 2.6% and 4.5% respectively, which indicate that the device and method provided by the present disclosure can reduce the olefin content in the gasoline significantly and increase the yield of propylene moderately.

The device and method provided by the present disclosure can promote the reduction of olefins in the gasolines in the gasoline pool of the entire refinery plant, and significantly improve the yield of the cracked gas; however, for the entire refinery plant, the yield or output of the cracked gas is significantly improved.

While some preferred embodiments of the present disclosure are described above with reference to the accompanying drawings, the present disclosure is not limited to the details in those embodiments. Those skilled in the art can make various simple modifications and variations to the technical solution of the present disclosure, without departing from the technical concept of the present disclosure. However, all these simple modifications and variations shall be deemed as falling in the scope of protection of the present disclosure.

In addition, it may be noted that the specific technical features described in above specific embodiments may be combined in any appropriate form, provided that there is no conflict among them. To avoid unnecessary repetition, various possible combinations are not described specifically in the present disclosure. Moreover, different embodiments of the present disclosure may also be combined freely as required, as long as the combinations don't deviate from the ideal of the present disclosure. However, such combinations shall also be deemed as being disclosed in the present disclosure.

## Claims

1. A catalytic cracking device, comprising a multi-stage reaction unit (1) and a cracking reaction unit (2), wherein the multi-stage reaction unit (1) comprises a variable-diameter riser pipe (11) and a multi-stage reaction settler (12), and the cracking reaction unit (2) comprises a cracking riser pipe (21) and a cracking settler (23); the variable-diameter riser pipe (11) comprises a first reaction zone (11a), a second reaction zone (11b) and a third reaction zone (11c) that are sequentially connected in series in its length direction, an outlet of the third reaction zone (11c) is in communication with the multi-stage reaction settler (12), the inner diameter of the second reaction zone (11b) is larger than the inner diameter of the first reaction zone (11a) and the inner diameter of the third reaction zone (11c), and an inner conveying pipe (13) extending into the second reaction zone (11b) is provided at the connection between the third reaction zone (11c) and the second reaction zone (11b);
the cracking settler (23) comprises a cracking stripping section (23a), a turbulent reaction section (23b) and a cracking settling section (23c) that are sequentially arranged in its length direction, an outlet of the cracking riser pipe (21) is located in the turbulent reaction section (23b), and the cracking stripping section (23a) is provided with a cracking catalyst outlet (25) that is in communication with the second reaction zone (11b).

2. The device of claim 1, wherein a ratio of the inner diameter of the inner conveying pipe (13) to the inner diameter of the third reaction zone (11c) is 0.9-1.2 : 1, and a ratio of the length of the inner conveying pipe (13) to the length of the second reaction zone (11b) is 0.15-0.8 : 1.

3. The device of claim 1, wherein a ratio of the inner diameter of the first reaction zone (11a) to the inner diameter of the second reaction zone (11b) to the inner diameter of the third reaction zone (11c) is 1 : 2-5 : 0.7-1.5, and a ratio of the length of the first reaction zone (11a) to the length of the second reaction zone (11b) to the length of the third reaction zone (11c) is 1 : 0.3-2 : 0.5-2;
a ratio of the inner diameter of the turbulent reaction section (23b) to the inner diameter of the cracking stripping section (23a) to the inner diameter of the cracking settling section (23c) is 1 : 0.4-0.8 : 2.5-5, and a ratio of the length of the turbulent reaction section (23b) to the length of the cracking stripping section (23a) to the length of the cracking settling section (23c) is 1 : 1.5-3 : 1.5-4; and
a ratio of the length of the variable-diameter riser pipe (11) to the length of the cracking riser pipe (21) is 1 : 0.5-1.2.

4. The device of claim 1, wherein at least one inner conveying hole (13a) is provided in a side wall of the inner conveying pipe (13), and a distance between the inner conveying hole (13a) and an inlet of the third reaction zone (11c) is 0.5-2 m.

5. The device of claim 4, wherein a ratio of the total area of the at least one inner conveying hole (13a) to the cross-sectional area of the inner conveying pipe (13) is 0.05-0.3 : 1.

6. The device according to any of claims 1 to 5, wherein an inner distribution component (14) connected to the first reaction zone (11a) is provided inside the second reaction zone (11b), and the inner distribution component (14) is provided with a plurality of distribution holes (14a).

7. The device of claim 6, wherein the inner distribution component (14) comprises a distribution cylinder (14b) connected to the first reaction zone (11a) and an end distribution plate (14c) connected to the distribution cylinder (14b), wherein both the distribution cylinder (14b) and the end distribution plate (14c) are provided with the distribution holes (14a), and the end distribution plate (14c) is located at an end of the distribution cylinder (14b) away from the first reaction zone (11a).

8. The device of claim 7, wherein a ratio of the total area of the distribution holes (14a) in the distribution cylinder (14b) to the cross-sectional area of the first reaction zone (11a) is 0.6-4 : 1; and
a ratio of the total area of the distribution holes (14a) in the end distribution plate (14c) to the vertical projection area of the end distribution plate (14c) is 0.1-0.3 : 1.

9. The device of claim 7, wherein a side channel (14d) extending to the outside of the distribution cylinder (14b) is provided at the distribution holes (14a) in the distribution cylinder (14b), and an open section of the side channel (14d) away from the distribution cylinder (14b) is a bevel surface facing the first reaction zone (11a).

10. The device of claim 7, wherein a ratio of the area of the end distribution plate (14c) to the cross-sectional area of the second reaction zone (11b) is 0.7-0.85 : 1.

11. The device according to any of claims 1 to 5, wherein the first reaction zone (11a), the second reaction zone (11b), the third reaction zone (11c) and the inner conveying pipe (13) are coaxially arranged, and the cracking catalyst outlet (25) is located at the bottom of the cracking stripping section (23a) and is in communication with the bottom of the second reaction zone (11b).

12. The device according to any of claims 1 to 5, wherein the variable-diameter riser pipe (11) further comprises a multi-stage reaction pre-rising section (11d) connected to an inlet of the first reaction zone (11a), and the cracking riser pipe (21) comprises a cracking pre-rising section (21b) and a cracking reaction section (21a) that are sequentially connected in series in its length direction, an outlet of the cracking reaction section (21a) is located at an end of the turbulent reaction section (23b) near the cracking stripping section (23a), a transition section between the multi-stage reaction pre-rising section (11d) and the first reaction zone (11a) is in communication with a multi-stage reaction feeding unit (7), and a transition section between the cracking pre-rising section (21b) and the cracking reaction section (21a) is in communication with a cracking feeding unit (8).

13. The device of claim 12, wherein a cracking distributor (22) is provided at the outlet of the cracking reaction section (21a), and a gas phase outlet of the cracking settling section (23c) is in communication with the multi-stage reaction settler (12).

14. The device of any of claims 1 to 5, further comprising a regeneration unit (3), wherein the multi-stage reaction settler (12) is provided with a multi-stage reaction catalyst outlet (15) in communication with a feeding inlet of the regeneration unit (3), and a regenerated catalyst outlet (31) of the regeneration unit (3) is connected to the variable-diameter riser pipe (11) and/or the cracking riser pipe (21).

15. A method for catalytic cracking, **characterized in that** the method employs the device of any of claims 1 to 14, and comprises the following steps:
inputting a multi-stage reaction mixture formed by mixing heavy raw materials with a multi-stage reaction catalyst from the inlet of the first reaction zone (11a) into the first reaction zone (11a) and the second reaction zone (11b) sequentially, and then into the third reaction zone (11c) through the inner conveying pipe (13) for multi-stage catalytic reactions to obtain multi-stage reactants, and performing multi-stage reaction separation on the multi-stage reactants through the multi-stage reaction settler (12) to obtain multi-stage reaction oil and gas products and a spent multi-stage reaction catalyst;
inputting a cracking mixture formed by mixing light raw materials with a cracking catalyst from the inlet of the cracking riser pipe (21) and performing a cracking catalytic reaction through the cracking riser pipe (21) to obtain cracking reactants, feeding the cracking reactants into the turbulent reaction section (23b) for a turbulent reaction, then performing cracking separation through the cracking settling section (23c) and cracking stripping through the cracking stripping section (23a) to obtain cracking oil and gas products and a spent cracking catalyst; and
inputting the spent cracking catalyst into the second reaction zone (11b) from the cracking catalyst outlet (25) to mix it with the multi-stage reaction mixture.

16. The method of claim 15, wherein the inlet temperature of the inner conveying pipe (13) is 510-540°C, and the outlet temperature of the cracking riser pipe (21) is 540-620°C.

17. The method of claim 15, wherein the inlet temperature of the inner conveying pipe (13) is 550-640°C, and the outlet temperature of the cracking riser pipe (21) is 560-660°C.

18. The method according to any of claims 15 to 17, wherein the multi-stage reaction mixture is retained in the first reaction zone (11a) for 0.8-2s, retained in the second reaction zone (11b) for 5-15s, and retained in the third reaction zone (11c) for 0.5-1.5s; and
the cracking mixture is retained the cracking riser pipe (21) for 0.8-3.5s, and retained in the turbulent reaction section (23b) for 3-13s.
